# EUROPÄISCHE PATENTANMELDUNG

(11) **EP 3 896 918 A1**
(43) Veröffentlichungstag der Anmeldung: **20.10.2021**
(21) Anmeldenummer: 20170149.7
(22) Anmeldetag: 17.04.2020
(51) Int. Cl.: H04L 12/40, G05B 19/418, H04L 12/853

(54) **VERFAHREN ZUM BETRIEB EINES KOMMUNIKATIONSSYSTEMS ZUR ÜBERMITTLUNG ZEITKRITISCHER DATEN, DOMÄNEN-STEUERUNGSEINRICHTUNG UND KOMMUNIKATIONSSTEUERUNGSEINRICHTUNG**

(71) Anmelder: Siemens Aktiengesellschaft, 80333 München (DE)
(72) Erfinder: Höme, Stephan, 91126 Schwabach (DE); Kerschbaum, Sven, 90768 Fürth (DE); Steindl, Günter, 92284 Poppenricht (DE)

(57) **Zusammenfassung**

In einem Kommunikationssystem zur Übermittlung zeitkritischer Daten werden ausgewählte Datagramme (300) Datenströmen zugeordnet und zwischen ersten Kommunikationsgeräten (201) und zweiten Kommunikationsgeräten (202) über zumindest die ersten und zweiten Kommunikationsgeräte umfassende Pfade übermittelt. Reservierungsanfragen zur Bereitstellung von Ressourcen für eine Übertragung der Datenströme jeweils an eine Domänen-Steuerungseinrichtung (501-503) übermittelt. Die Domänen-Steuerungseinrichtungen überprüfen bei Reservierungsanfragen jeweils, ob das jeweilige erste und zweite Kommunikationsgerät von derselben Domäne umfasst sind. Domänen-übergreifende Reservierungsanfragen werden jeweils an eine übergeordnete Kommunikationssteuerungseinrichtung (500) weitergeleitet. Die übergeordnete Kommunikationssteuerungseinrichtung ermittelt von den Reservierungsanfragen jeweils betroffene Domänen und übermittelt auf jeweilige Abschnitte der Pfade beschränkte Teil-Reservierungsanfragen an die Domänen-Steuerungseinrichtungen der ermittelten Domänen.

## Beschreibung

Die vorliegende Erfindung betrifft ein Verfahren zum Betrieb eines Kommunikationssystems zur Übermittlung zeitkritischer Daten, insbesondere Steuerungsdaten in einem industriellen Automatisierungssystem, sowie eine Domänen-Steuerungseinrichtung und eine Kommunikationssteuerungseinrichtung, die insbesondere zur Koordination zwischen Domänen-Steuerungseinrichtungen vorgesehen ist.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus der älteren europäischen Patentanmeldung mit dem Anmeldeaktenzeichen 18210084.2 ist ein Kommunikationssystem zur Übermittlung zeitkritischer Daten bekannt, bei dem ausgewählte Datagramme Datenströmen zugeordnet und über Pfade für die Datenströme übermittelt werden. Reservierungsanfragen, die jeweils zumindest Angaben zu einem ersten und zweiten Netzknoten und Dienstgüteparameter umfassen, werden zur Reservierung von durch Kommunikationsgeräte für eine Übertragung von Datenströmen bereitzustellenden Ressourcen jeweils durch eine Reservierungsfunktionskomponente, die einem ersten oder zweiten Kommunikationsendgerät oder einem mit diesem verbundenen Datagramme weiterleitenden Kommunikationsgerät zugeordnet ist, an eine übergeordnete Kommunikationssteuerungseinrichtung übermittelt. Die übergeordnete Kommunikationssteuerungseinrichtung ermittelt bei Reservierungsanfragen jeweils einen Pfad und überprüft, ob in Kommunikationsgeräten entlang des jeweiligen Pfades ausreichende Ressourcen für die Übertragung der Datenströme unter Einhaltung der spezifizierten Dienstgüteparameter verfügbar sind, und ermittelt für ausgewählte Kommunikationsgeräte eine vorgeschlagene lokale Zyklusdauer.

Da Kommunikationsnetzen zur Übermittlung zeitkritischer Daten, insbesondere Time-Sensitive Networks, einen großen Umfang und eine hohe Komplexität aufweisen können, werden zur Strukturierung derartiger Kommunikationsnetze Kommunikationsnetzdomänen verwendet. Diese Domänen ermöglichen eine administrative Gliederung eines Kommunikationsnetzes auf Sicherungsschicht (ISO/OSI-Schicht 2), insbesondere in verschiedene organisatorische Einheiten. Dabei kann für komplexe Maschinen jeweils eine Domäne vorgesehen sein. Somit kann jede dieser Maschinen ohne größere Probleme separat getestet werden, auch wenn Maschinen jeweils von unterschiedlichen Zulieferern stammen.

Der vorliegenden Erfindung liegt die Aufgabe zugrunde, ein Verfahren zum Betrieb eines mehrere Domänen umfassenden Kommunikationssystems zur Übermittlung zeitkritischer Daten schaffen, das eine effiziente, zuverlässige Ressourcenreservierung und Einrichtung von Datenströmen zur Übermittlung ausgewählter Daten über Domänengrenzen hinweg ermöglicht, und geeignete Vorrichtungen zur Durchführung des Verfahrens anzugeben.

Diese Aufgabe wird erfindungsgemäß durch ein Verfahren mit den in Anspruch 1 angegebenen Merkmalen, durch eine Domänen-Steuerungseinrichtung mit den in Anspruch 14 angegebenen Merkmalen und durch eine Kommunikationssteuerungseinrichtung mit den in Anspruch 15 angegebenen Merkmalen gelöst. Vorteilhafte Weiterbildungen sind in den abhängigen Ansprüchen angegeben.

Entsprechend dem erfindungsgemäßen Verfahren zum Betrieb eines Kommunikationssystems zur Übermittlung zeitkritischer Daten weist das Kommunikationssystem mehrere Domänen auf, die jeweils eine Vielzahl von Kommunikationsgeräten und eine diesen zugeordnete Domänen-Steuerungseinrichtung, insbesondere eine Network Management Engine (NME), umfassen. Ausgewählte Datagramme werden Datenströmen zugeordnet und zwischen ersten Kommunikationsgeräten und zweiten Kommunikationsgeräten über zumindest die ersten und zweiten Kommunikationsgeräte umfassende Pfade übermittelt. Reservierungsanfragen zur Bereitstellung von Ressourcen für eine Übertragung der Datenströme werden jeweils an die Domänen-Steuerungseinrichtung übermittelt, die dem jeweiligen ersten bzw. zweiten Kommunikationsgerät zugeordnet. Dabei werden die Ressourcen durch die von den Pfaden umfassten Kommunikationsgeräte bereitgestellt.

Vorzugsweise sind die ersten Kommunikationsgeräte über ein Time-sensitive Network, insbesondere entsprechend IEEE802.3-2018, IEEE 802.1Q-2018, IEEE 802.1AB-2016, IEEE 802.1AS-2020, IEEE 802.1BA-2011 bzw. IEEE 802.1CB-2017, mit den zweiten Kommunikationsgeräten verbunden. Insbesondere kann eine Weiterleitung der ausgewählten Datagramme mittels Frame Preemption, Time-Aware Shaper, Credit-Based Shaper, Burst Limiting Shaper, Peristaltic Shaper bzw. Priority-Based Shaper gemäß IEEE 802.1Q-2018 gesteuert werden.

Bei Reservierungsanfragen überprüfen die Domänen-Steuerungseinrichtungen erfindungsgemäß jeweils, ob das jeweilige erste und zweite Kommunikationsgerät von derselben Domäne umfasst sind. Domänen-übergreifende Reservierungsanfragen leiten die Domänen-Steuerungseinrichtungen jeweils an eine übergeordnete Kommunikationssteuerungseinrichtung, insbesondere eine Domain Management Entity (DME), weiter. Die übergeordnete Kommunikationssteuerungseinrichtung ermittelt von den Reservierungsanfragen jeweils betroffene Domänen und übermittelt auf jeweilige Abschnitte der Pfade beschränkte Teil-Reservierungsanfragen an die Domänen-Steuerungseinrichtungen der ermittelten Domänen. Vorteilhafterweise werden die Datenströme auf Reservierungsanfragen jeweils bidirektional eingerichtet.

Mit der vorliegenden Erfindung können bestehende Network Management Engines relativ aufwandsarm für eine Domänen-übergreifende Stream-Reservierung funktionell erweitert werden, insbesondere ohne dass für die Domänen-übergreifende Stream-Reservierung eine Verwendung eine Routing-Protokolls erforderlich wird. Im Vergleich zu einem zentralen Stream-Reservierungskonzept mit einer einzigen Network Management Engine für sämtliche Domänen können Kommunikationsnetze mit der vorliegenden Erfindung einfach erweitert werden. Insbesondere Domänen-interner Datenverkehr bleibt von derartigen Erweiterungen unbeeinflusst.

Entsprechend einer bevorzugten Ausgestaltung der vorliegenden Erfindung ermitteln die Domänen-Steuerungseinrichtungen bei auf ihre jeweilige Domäne beschränkten Reservierungsanfragen jeweils einen Pfad innerhalb ihrer Domäne und überprüfen, ob in den Kommunikationsgeräten entlang des jeweils ermittelten Pfades ausreichende Ressourcen für die Übertragung der Datenströme unter Einhaltung angegebener Dienstgüteparameter verfügbar sind. Dies ermöglicht eine einfache und effiziente Stream-Reservierung bei Domänen-internem Datenverkehr. Insbesondere umfassen die Reservierungsanfragen dabei jeweils zumindest Angaben zu ersten und zweiten Kommunikationsgeräten und Dienstgüteparametern. Die durch die Kommunikationsgeräte bereitzustellenden Ressourcen können beispielsweise nutzbare Übertragungszeitfenster, Bandbreite, zugesicherte maximale Latenz, Queue-Anzahl, Queue-Cache bzw. Adress-Cache in Switches oder Bridges umfassen. Dies ermöglicht eine umfassende Berücksichtigung von Dienstgüteparametern bei der Stream-Reservierung.

Die Domänen-Steuerungseinrichtungen übermitteln entsprechend einer weiteren Ausgestaltung der vorliegenden Erfindung bei ausreichenden Ressourcen jeweils Konfigurationsinformationen an die Kommunikationsgeräte, die vom jeweiligen Pfad umfasst sind. Vorteilhafterweise werden die Kommunikationsgeräte jeweils entsprechend den übermittelten Konfigurationsinformationen zur Bereitstellung der Ressourcen für die Übertragung der Datenströme eingerichtet. Die Reservierungsanfragen können beispielsweise jeweils durch eine Reservierungsfunktionskomponente, die dem jeweiligen ersten oder zweiten Kommunikationsgerät oder einem mit diesem verbundenen Datagramme weiterleitenden Kommunikationsgerät zugeordnet ist, an die jeweilige Domänen-Steuerungseinrichtung übermittelt werden.

Vorteilhafterweise beginnen bzw. enden die Abschnitte der Pfade, auf welche die Teil-Reservierungsanfragen beschränkt sind, jeweils zumindest an einem Domänenkopplung-Kommunikationsgerät, das an eine Übertagungsstrecke zwischen zwei Domänen angeschlossen ist, bzw. am jeweiligen ersten oder zweiten Kommunikationsgerät. Auf diese Weise können Pfadabschnitte für die Teil-Reservierungsanfragen einfach handhabbar und klar festgelegt werden. Vorzugsweise umfassen die Teil-Reservierungsanfragen dabei jeweils zumindest Angaben zum jeweiligen Domänenkopplung-Kommunikationsgerät, zum ersten bzw. zweiten Kommunikationsgerät sowie zu Dienstgüteparametern.

Entsprechend einer weiteren vorteilhaften Ausgestaltung der vorliegenden Erfindung ermittelt bei dem die übergeordnete Kommunikationssteuerungseinrichtung mittels Topologie-Erkennung sämtliche Domänen, Domänenkopplung-Kommunikationsgeräte, Domänenkopplung-Ports der Domänenkopplung-Kommunikationsgeräte und Übertragungsstrecken zwischen Domänen. In diesem Fall umfassen die Teil-Reservierungsanfragen jeweils eine Angabe zu zumindest einem Domänenkopplung-Port eines jeweiligen Domänenkopplung-Kommunikationsgeräts. Dies vereinfacht eine Koordination der durch die Domänen-Steuerungseinrichtungen jeweils Domänen-intern zu reservierenden Streams. Darüber hinaus kann die übergeordnete Kommunikationssteuerungseinrichtung Domänengrenzen zuverlässig mittels Link Layer Discovery Protocol ermitteln.

Vorzugsweise überwacht die übergeordnete Kommunikationssteuerungseinrichtung eine Kopplung oder Kopplungen der Domänen fortlaufend auf Topologieänderungen. Für geänderte Pfade, die aus Topologieänderungen resultieren, übermittelt die übergeordnete Kommunikationssteuerungseinrichtung aktualisierte Teil-Reservierungsanfragen an die Domänen-Steuerungseinrichtungen der jeweiligen Domänen. Somit ist auch bei Topologieänderungen zwischen den Domänen eine Anpassung bzw. weitestgehende Aufrechterhaltung von Stream-Reservierungen möglich.

Entsprechend einer besonders bevorzugten Ausgestaltung der vorliegenden Erfindung umfasst die übergeordnete Kommunikationssteuerungseinrichtung jeweils eine Instanz in jeder Domäne. Dabei weisen die Instanzen jeweils sämtliche Funktionen einer übergeordneten Kommunikationssteuerungseinrichtung auf und koordinieren sich untereinander hinsichtlich einer Ausführung ihrer Funktionen. Durch eine derartige Verteilung von Funktionen der übergeordneten Kommunikationssteuerungseinrichtung kann ein Single-Point-of-Failure vermieden werden, der sich ansonsten bei Ausfall der übergeordneten Kommunikationssteuerungseinrichtung ergäbe. Beispielsweise können die Instanzen untereinander eine aktive Instanz auswählen und nicht aktive Instanzen in einem Bereitschaftszustand betrieben werden. Insbesondere können die Instanzen jeweils in eine Domänen-Steuerungseinrichtung integriert sein. In diesem Fall stellen die Instanzen funktionelle Erweiterungen der Domänen-Steuerungseinrichtungen dar.

Die erfindungsgemäße Domänen-Steuerungseinrichtung ist zur Durchführung eines Verfahrens entsprechend vorangehenden Ausführungen geeignet und umfasst zumindest einen Port zur Verbindung mit einem Datagramme weiterleitenden Kommunikationsgerät. Die Domänen-Steuerungseinrichtung ist dafür ausgestaltet und eingerichtet, Reservierungsanfragen zur Bereitstellung von Ressourcen für eine Übertragung von Datenströmen zu empfangen. Dabei werden die Datenströme zwischen ersten Kommunikationsgeräten und zweiten Kommunikationsgeräten über zumindest die ersten und zweiten Kommunikationsgeräte umfassende Pfade übermittelt, und die Ressourcen werden durch die von den Pfaden umfassten Kommunikationsgeräte bereitgestellt. Außerdem ist die Domänen-Steuerungseinrichtung dafür ausgestaltet und eingerichtet, bei Reservierungsanfragen jeweils zu überprüfen, ob ein jeweiliges erstes und zweites Kommunikationsgerät von derselben Domäne umfasst sind. Darüber hinaus ist die Domänen-Steuerungseinrichtung dafür ausgestaltet und eingerichtet, Domänen-übergreifende Reservierungsanfragen jeweils an eine übergeordnete Kommunikationssteuerungseinrichtung weiterzuleiten.

Die erfindungsgemäße Kommunikationssteuerungseinrichtung ist zur Durchführung eines Verfahrens entsprechend vorangehenden Ausführungen geeignet, insbesondere zur Wahrnehmung einer Rolle als Koordinierungseinrichtung für Domänen-Steuerungseinrichtungen, und umfasst zumindest einen Port zur Verbindung mit mehreren Domänen-Steuerungseinrichtungen. Die Kommunikationssteuerungseinrichtung ist dafür ausgestaltet und eingerichtet, von den Domänen-Steuerungseinrichtungen Domänen-übergreifende Reservierungsanfragen zur Bereitstellung von Ressourcen für eine Übertragung von Datenströmen zu empfangen. Dabei werden die Datenströme zwischen ersten Kommunikationsgeräten und zweiten Kommunikationsgeräten über zumindest die ersten und zweiten Kommunikationsgeräte umfassende Pfade übermittelt, und die Ressourcen werden durch die von den Pfaden umfassten Kommunikationsgeräte bereitgestellt. Außerdem ist das Kommunikationssteuerungseinrichtung dafür ausgestaltet und eingerichtet, von den Reservierungsanfragen jeweils betroffene Domänen zu ermitteln und auf jeweilige Abschnitte der Pfade beschränkte Teil-Reservierungsanfragen an die Domänen-Steuerungseinrichtungen der ermittelten Domänen zu übermitteln.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: ein Ablaufdiagramm für eine Reservierung von Ressourcen zur Übermittlung von Datenströmen innerhalb des Kommunikationssystems gemäß Figur 1.

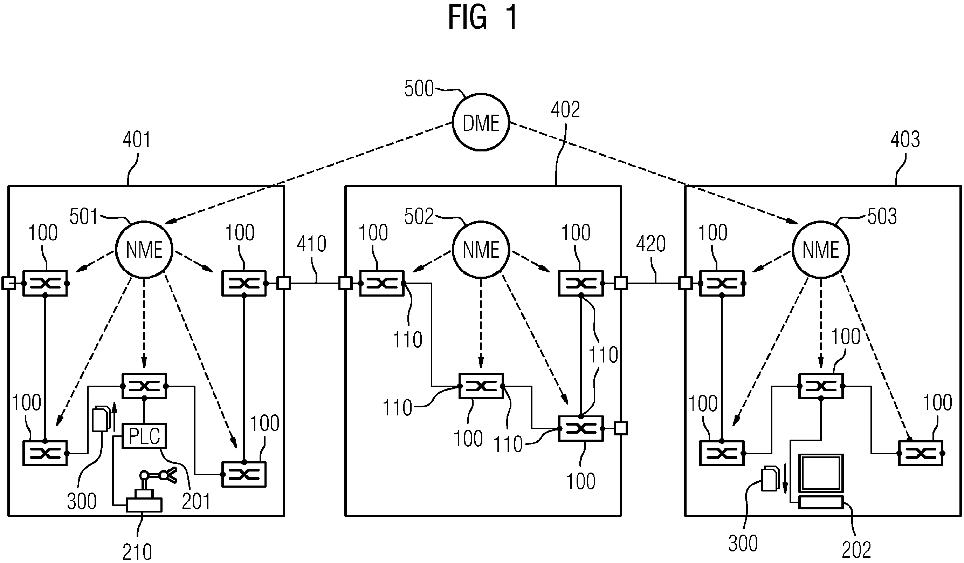

Das in Figur 1 dargestellte Kommunikationssystem für ein industrielles Automatisierungssystem weist mehrere Domänen 401-403 auf, die jeweils eine Vielzahl von Bridges oder Switches 100 als Datagramme weiterleitende Kommunikationsgeräte 100 und eine diesen zugeordnete Domänen-Steuerungseinrichtung bzw. Network Management Engine 501-503 umfassen. Die Network Management Engines 501-503 weisen jeweils zumindest einen Port zur Verbindung mit einer Bridge bzw. einem Switch 100 auf und werden bei Domänen-übergreifendem Datenverkehr durch eine übergeordnete Kommunikationssteuerungseinrichtung bzw. Domain Management Engine 500 koordiniert. Die Domain Management Engine 500 weist zumindest einen Port zur Verbindung mit mehreren Network Management Engines 501-503 auf.

Die Bridges bzw. Switches 100 umfassen jeweils mehrere Ports 110 sowie einen Backplane-Switch als Koppelelement und dienen insbesondere zum Anschluss von speicherprogrammierbaren Steuerungen 201, Bedien- und Beobachtungsstationen 202, I/O-Controllern oder I/O-Modulen, die ebenfalls Kommunikationsgeräte bzw. Kommunikationsendgeräte darstellen. Im vorliegenden Ausführungsbeispiel ist das Kommunikationssystem als Time-Sensitive Network ausgestaltet, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Eine Weiterleitung von Datenrahmen (Frames) innerhalb des Kommunikationssystems kann beispielsweise mittels Frame Preemption gemäß IEEE 802.1Q-2018, Time-Aware Shaper gemäß IEEE 802.1Q-2018, Credit-Based Shaper gemäß IEEE 802.1Q-2018, Burst Limiting Shaper, Peristaltic Shaper bzw. Priority-Based Shaper gesteuert werden.

Speicherprogrammierbare Steuerungen 201 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Mittels erster Kommunikations- bzw. Automatisierungsgeräte, die insbesondere eine Talker- oder Provider Funktion haben, werden Informationen bzw. Dienste über Datenströme zur Nutzung an zweiten Kommunikations- bzw. Automatisierungsgeräten bereitgestellt, die insbesondere eine Listener- oder Consumer-Funktion haben. Einem Automatisierungsgerät kann gleichzeitig sowohl eine oder mehrere Talker-Funktionen als auch eine oder mehrere Listener-Funktionen haben, beispielsweise wenn es einerseits Automatisierungsdienste bereitstellt und andererseits Automatisierungsdienste anderer Geräte nutzt. Aus diesem Grund werden Datenströme auf Reservierungsanfragen im vorliegenden Ausführungsbeispiel vorzugsweise jeweils bidirektional eingerichtet.

Die speicherprogrammierbare Steuerung 201 kann beispielsweise Messwerte liefern und somit eine Talker-Funktion haben. Dagegen kann die Bedien- und Beobachtungsstation 202 eine Listener-Funktion aufweisen und insbesondere durch die speicherprogrammierbare Steuerung 201 bereitgestellte Informationen empfangen. Grundsätzlich könnte die Bedien- und Beobachtungsstation 202 von der speicherprogrammierbaren Steuerung 201 empfangene Informationen analysieren und hieraus Steuerungsparameter für die speicherprogrammierbare Steuerung 201 vorgeben. Somit können sowohl die speicherprogrammierbare Steuerung 201 als auch die Bedien- und Beobachtungsstation 202 beide Funktionen wahrnehmen. Daher werden Datenströme auf Reservierungsanfragen vorzugsweise jeweils bidirektional eingerichtet.

Zur Übermittlung zeitkritischer Daten werden zumindest ausgewählte Datenrahmen (Frames) 300 Datenströmen zugeordnet und zwischen ersten Kommunikationsgeräten 201 und zweiten Kommunikationsgeräten 202 mit Listener-Funktion über zumindest die ersten und zweiten Kommunikationsgeräte 201-202 umfassende Pfade übermittelt. Im vorliegenden Ausführungsbeispiel stellt die speicherprogrammierbare Steuerung 201 ein erstes Kommunikationsgerät mit Talker-Funktion dar, während die Bedien- und Beobachtungsstation 202 ein zweites Kommunikationsgerät mit Listener Funktion darstellt. Reservierungsanfragen zur Bereitstellung von Ressourcen für eine Übertragung der Datenströme jeweils an die Network Management Engine 501-503 übermittelt, die dem jeweiligen ersten bzw. zweiten Kommunikationsgerät 201, 202 zugeordnet ist. Dabei werden die Ressourcen insbesondere durch die von den Pfaden umfassten Switches bereitgestellt.

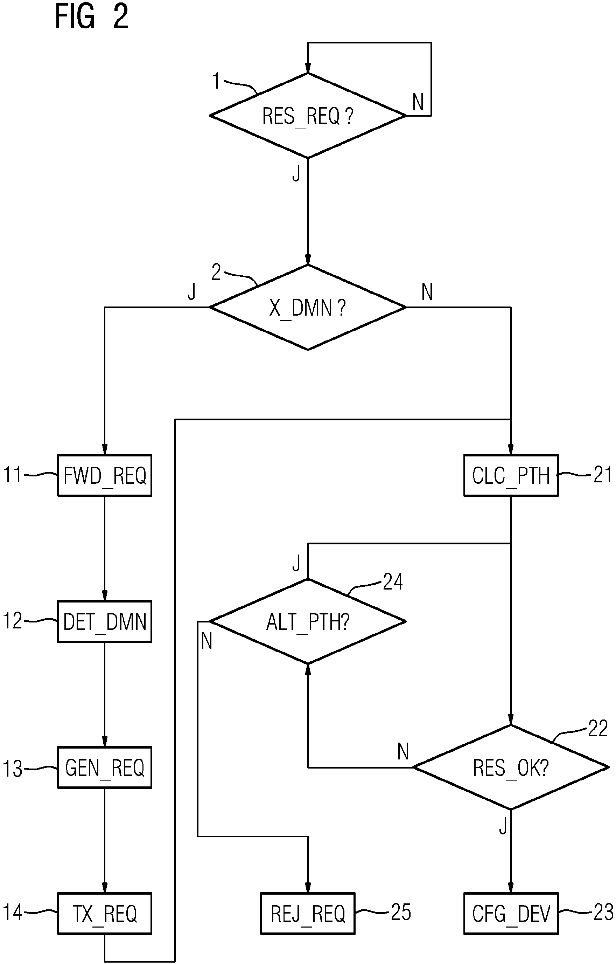

Entsprechend Schritt 1 des in Figur 2 dargestellten Ablaufdiagramms überprüfen die Network Management Engines 501-503 jeweils fortlaufend, ob Reservierungsanfragen zu beantworten sind. Im vorliegenden Ausführungsbeispiel umfassen Reservierungsanfragen jeweils zumindest Angaben zu ersten und zweiten Kommunikationsgeräten und zu Dienstgüteparametern. Bei Reservierungsanfragen überprüfen die Network Management Engines 501-503 jeweils, ob das jeweilige erste und zweite Kommunikationsgerät 201, 202 von derselben Domäne 401-403 umfasst sind (Schritt 2). Eine Ermittlung, ob beide Kommunikationsgeräte von derselben Domäne umfasst sind, kann beispielsweise zuvor applikativ im ersten oder zweiten Kommunikationsgerät erfolgen. In diesem Fall sendet das erste bzw. zweite Kommunikationsgerät mit der Reservierungsanfrage eine Information über eine unterschiedliche Domänenzugehörigkeit an die jeweilige Network Management Engine.

Sind das jeweilige erste und zweite Kommunikationsgerät 201, 202 nicht von derselben Domäne 401-403 umfasst, leiten die Network Management Engines 501-503 entsprechend Schritt 11 Domänen-übergreifende Reservierungsanfragen jeweils an die Domain Management Engine 500 weiter. Die Domain Management Engine 500 ermittelt von den Reservierungsanfragen jeweils betroffene Domänen (Schritt 12), erzeugt auf jeweilige Abschnitte der Pfade beschränkte Teil-Reservierungsanfragen (Schritt 13) und übermittelt diese an die Network Management Engines 501-503 der ermittelten Domänen 401-403 (Schritt 14).

Die Abschnitte der Pfade, auf welche die Teil-Reservierungsanfragen beschränkt sind, beginnen bzw. enden jeweils zumindest an einem Domänenkopplung-Switch 100, der an eine Übertagungsstrecke 410, 420 zwischen zwei Domänen 401-402, 402-403 angeschlossen ist, bzw. am jeweiligen ersten oder zweiten Kommunikationsgerät 201, 202. Darüber hinaus umfassen die Teil-Reservierungsanfragen jeweils neben Angaben zu Dienstgüteparametern Angaben zum jeweiligen Domänenkopplung-Switch 100 bzw. zum jeweiligen ersten oder zweiten Kommunikationsgerät 201, 202 sowie Angaben zu einem Domänenkopplung-Port 110 des jeweiligen Domänenkopplung-Switches 100. Hierzu ermittelt die Domain Management Engine 500 mittels Topologie-Erkennung sämtliche Domänen 401-403, Domänenkopplung-Switches 100, Domänenkopplung-Ports 110 und Übertragungsstrecken 410, 420 zwischen Domänen 401-403.

Vorzugsweise ermittelt die Domain Management Engine 500 Domänengrenzen mittels Link Layer Discovery Protocol. Alternativ oder zusätzlich zu einer Topologie-Erkennung ist auch ein automatischer Abgleich von Datenbasen, die jeweils den Domänen 401-403 zugeordnet sind, mittels Link-local Registration Protocol (LRP) entsprechend IEEE P802.1CS möglich. Damit kann die vorliegende Erfindung auch bei einem dezentralen bzw. verteilten Stream-Reservierungskonzept genutzt werden. Wesentlich hierfür ist beschriebene, durch die Domain Management Engine 500 gesteuerte Delegation einer Ressourcenreservierung an eine für die jeweilige Domäne 401-403 zuständige zentrale oder verteilte Domänen-Steuerungseinrichtung. Eine solche Funktion ist bei einem dezentralen Stream-Reservierungskonzept auf die Switches 100 einer Domäne 401-403 verteilt.

Die Network Management Engines 501-503 ermitteln entsprechend Schritt 21 des in Figur 2 dargestellten Ablaufdiagramms bei auf ihre jeweilige Domäne 401-403 beschränkten Reservierungsanfragen jeweils einen Pfad innerhalb ihrer Domäne 401-403. Außerdem überprüfen die Network Management Engines 501-503 entsprechend Schritt 22, ob insbesondere in den Switches 100 entlang des jeweils ermittelten Pfades ausreichende Ressourcen für die Übertragung der Datenströme unter Einhaltung angegebener Dienstgüteparameter verfügbar sind. Die durch die Switches 100 bereitzustellenden Ressourcen umfassen beispielsweise nutzbare Übertragungszeitfenster, Bandbreite, zugesicherte maximale Latenz, Queue-Anzahl, Queue-Cache und Adress-Cache in Switches.

Bei ausreichenden Ressourcen ermitteln die Network Management Engines 501-503 jeweils Konfigurationsinformationen für die von den Pfaden umfassten Switches 100 und übermitteln die Konfigurationsinformationen entsprechend Schritt 23 an Konfigurationssteuerungseinheiten, die in die Switches 100 integriert bzw. ihnen zugeordnet sind. Damit richten die Konfigurationssteuerungseinheiten die jeweiligen Switches 100 entsprechend den übermittelten Konfigurationsinformationen zur Bereitstellung der Ressourcen für die Übertragung der Datenströme ein. Stehen entsprechend Schritt 22 keine ausreichenden Ressourcen für den jeweils ermittelten Pfad zur Verfügung, wird überprüft, ob zumindest ein alternativer Pfad zu Verfügung steht (Schritt 24). Falls dies der Fall ist, wird anschließend entsprechend Schritt 23 für den alternativen Pfad erneut überprüft, ob ausreichende Ressourcen zur Übermittlung des Datenstroms verfügbar sind. Sind weder ein alternativer Pfad noch ausreichende Ressourcen verfügbar, wird die jeweilige Reservierungsanfrage entsprechend Schritt 25 zurückgewiesen.

Vorzugsweise werden die Reservierungsanfragen jeweils durch eine Reservierungsfunktionskomponente, die dem jeweiligen ersten oder zweiten Kommunikationsgerät 201, 202 oder einem mit diesem verbundenen Switch 100 zugeordnet ist, an die jeweilige Network Management Engine 501-503 übermittelt. In diesem Fall übermitteln die Network Management Engine 501-503 auf erfolgreiche Reservierungsanfragen jeweils eine dem Datenstrom zugeordnete Datenstrom-Ziel-Adresse an die Reservierungsfunktionskomponente des ersten bzw. zweiten Kommunikationsendgeräts 201, 202 oder des mit diesem verbundenen Switches 100.

Im vorliegenden Ausführungsbeispiel überwacht die Domain Management Engine 500 eine Kopplung bzw. die Kopplungen der Domänen 401-403 fortlaufend auf Topologieänderungen und ermittelt aus Topologieänderungen resultierende geänderte Pfade. Dementsprechend übermittelt die Domain Management Engine 500 für geänderte Pfade, die aus Topologieänderungen resultieren, aktualisierte Teil-Reservierungsanfragen an die Network Management Engines 501-503 bzw. Domänen-Steuerungseinrichtungen der jeweiligen Domänen.

Ein Single-Point-of-Failure infolge eines Ausfalls der Domain Management Engine 500 kann vermieden werden, indem die Domain Management Engine 500 jeweils eine Instanz in jeder Domäne 401-403 umfasst. Dabei weisen die Instanzen jeweils sämtliche Funktionen der der Domain Management Engine 500 auf und koordinieren sich untereinander hinsichtlich einer Ausführung ihrer Funktionen. Beispielsweise können die Instanzen untereinander eine aktive Instanz auswählen und nicht aktive Instanzen in einem Bereitschaftszustand betrieben werden. Insbesondere können die Instanzen jeweils in die Network Management Engines 501-503 integriert sein.

## Patentansprüche

1. Verfahren zum Betrieb eines Kommunikationssystems zur Übermittlung zeitkritischer Daten, bei dem
- das Kommunikationssystem mehrere Domänen (401-403) aufweist, die jeweils eine Vielzahl von Kommunikationsgeräten (100, 201-202) und eine diesen zugeordnete Domänen-Steuerungseinrichtung (501-503) umfassen,
- ausgewählte Datagramme (300) Datenströmen zugeordnet und zwischen ersten Kommunikationsgeräten (201) und zweiten Kommunikationsgeräten (202) über zumindest die ersten und zweiten Kommunikationsgeräte umfassende Pfade übermittelt werden,
- Reservierungsanfragen zur Bereitstellung von Ressourcen für eine Übertragung der Datenströme jeweils an die Domänen-Steuerungseinrichtung (501-503) übermittelt werden, die dem jeweiligen ersten und/oder zweiten Kommunikationsgerät (201-202) zugeordnet ist, wobei die Ressourcen durch die von den Pfaden umfassten Kommunikationsgeräte (100) bereitgestellt werden,
- die Domänen-Steuerungseinrichtungen bei Reservierungsanfragen jeweils überprüfen, ob das jeweilige erste und zweite Kommunikationsgerät von derselben Domäne umfasst sind,
- die Domänen-Steuerungseinrichtungen (501-503) Domänen-übergreifende Reservierungsanfragen jeweils an eine übergeordnete Kommunikationssteuerungseinrichtung (500) weiterleiten,
- die übergeordnete Kommunikationssteuerungseinrichtung von den Reservierungsanfragen jeweils betroffene Domänen ermittelt und auf jeweilige Abschnitte der Pfade beschränkte Teil-Reservierungsanfragen an die Domänen-Steuerungseinrichtungen der ermittelten Domänen übermittelt.

2. Verfahren nach Anspruch 1,
bei dem die Domänen-Steuerungseinrichtungen (501-503) bei auf ihre jeweilige Domäne beschränkten Reservierungsanfragen jeweils einen Pfad innerhalb ihrer Domäne (401-403) ermitteln und überprüfen, ob in den Kommunikationsgeräten (100) entlang des jeweils ermittelten Pfades ausreichende Ressourcen für die Übertragung der Datenströme unter Einhaltung angegebener Dienstgüteparameter verfügbar sind, wobei die Reservierungsanfragen jeweils zumindest Angaben zu ersten und zweiten Kommunikationsgeräten und Dienstgüteparametern umfassen.

3. Verfahren nach Anspruch 2,
bei dem die Domänen-Steuerungseinrichtungen (501-503) bei ausreichenden Ressourcen jeweils Konfigurationsinformationen an die Kommunikationsgeräte (100) übermitteln, die vom jeweiligen Pfad umfasst sind.

4. Verfahren nach Anspruch 3,
bei dem die Kommunikationsgeräte (100) jeweils entsprechend den übermittelten Konfigurationsinformationen zur Bereitstellung der Ressourcen für die Übertragung der Datenströme eingerichtet werden.

5. Verfahren nach einem der Ansprüche 1 bis 4,
bei dem die Reservierungsanfragen jeweils durch eine Reservierungsfunktionskomponente, die dem jeweiligen ersten oder zweiten Kommunikationsgerät (201, 202) oder einem mit diesem verbundenen Datagramme weiterleitenden Kommunikationsgerät (100) zugeordnet ist, an die jeweilige Domänen-Steuerungseinrichtung (501-503) übermittelt werden.

6. Verfahren nach einem der Ansprüche 1 bis 5,
bei dem die Abschnitte der Pfade, auf welche die Teil-Reservierungsanfragen beschränkt sind, jeweils zumindest an einem Domänenkopplung-Kommunikationsgerät, das an eine Übertagungsstrecke zwischen zwei Domänen angeschlossen ist, und/oder am jeweiligen ersten oder zweiten Kommunikationsgerät anfangen oder enden.

7. Verfahren nach Anspruch 6,
bei dem die Teil-Reservierungsanfragen jeweils zumindest Angaben zum jeweiligen Domänenkopplung-Kommunikationsgerät, ersten Kommunikationsgerät und/oder zweiten Kommunikationsgeräten sowie zu Dienstgüteparametern umfassen.

8. Verfahren nach einem der Ansprüche 6 oder 7,
bei dem die übergeordnete Kommunikationssteuerungseinrichtung mittels Topologie-Erkennung sämtliche Domänen, Domänenkopplung-Kommunikationsgeräte, Domänenkopplung-Ports der Domänenkopplung-Kommunikationsgeräte und Übertragungsstrecken zwischen Domänen ermittelt und bei dem die Teil-Reservierungsanfragen jeweils eine Angabe zu zumindest einem Domänenkopplung-Port eines jeweiligen Domänenkopplung-Kommunikationsgeräts umfassen.

9. Verfahren nach Anspruch 8,
bei dem die übergeordnete Kommunikationssteuerungseinrichtung (500) mittels Link Layer Discovery Protocol Domänengrenzen ermittelt.

10. Verfahren nach einem der Ansprüche 8 oder 9,
bei dem die übergeordnete Kommunikationssteuerungseinrichtung (500) eine Kopplung oder Kopplungen der Domänen fortlaufend auf Topologieänderungen überwacht und bei dem die übergeordnete Kommunikationssteuerungseinrichtung für geänderte Pfade, die aus Topologieänderungen resultieren, aktualisierte Teil-Reservierungsanfragen an die Domänen-Steuerungseinrichtungen der jeweiligen Domänen übermittelt.

11. Verfahren nach einem der Ansprüche 1 bis 10,
bei dem die übergeordnete Kommunikationssteuerungseinrichtung jeweils eine Instanz in jeder Domäne umfasst, wobei die Instanzen jeweils sämtliche Funktionen einer übergeordneten Kommunikationssteuerungseinrichtung aufweisen und sich untereinander hinsichtlich einer Ausführung ihrer Funktionen koordinieren.

12. Verfahren nach Anspruch 11,
bei dem die Instanzen untereinander eine aktive Instanz auswählen und nicht aktive Instanzen in einem Bereitschaftszustand betrieben werden.

13. Verfahren nach einem der Ansprüche 11 oder 12,
bei dem die Instanzen jeweils in eine Domänen-Steuerungseinrichtung integriert sind.

14. Domänen-Steuerungseinrichtung zur Durchführung eines Verfahrens nach einem der Ansprüche 1 bis 13 mit
- zumindest einem Port zur Verbindung mit einem Datagramme weiterleitenden Kommunikationsgerät (100),
- wobei die Domänen-Steuerungseinrichtung dafür ausgestaltet und eingerichtet ist, Reservierungsanfragen zur Bereitstellung von Ressourcen für eine Übertragung von Datenströmen zu empfangen, wobei die Datenströme zwischen ersten Kommunikationsgeräten (201) und zweiten Kommunikationsgeräten (202) über zumindest die ersten und zweiten Kommunikationsgeräte umfassende Pfade übermittelt werden und die Ressourcen durch die von den Pfaden umfassten Kommunikationsgeräte (100) bereitgestellt werden,
- wobei die Domänen-Steuerungseinrichtung dafür ausgestaltet und eingerichtet ist, bei Reservierungsanfragen jeweils zu überprüfen, ob ein jeweiliges erstes und zweites Kommunikationsgerät von derselben Domäne umfasst sind,
- wobei die Domänen-Steuerungseinrichtung dafür ausgestaltet und eingerichtet ist, Domänen-übergreifende Reservierungsanfragen jeweils an eine übergeordnete Kommunikationssteuerungseinrichtung weiterzuleiten.

15. Kommunikationssteuerungseinrichtung zur Durchführung eines Verfahrens nach einem der Ansprüche 1 bis 13 mit
- zumindest einem Port zur Verbindung mit mehreren Domänen-Steuerungseinrichtungen (501-503),
- wobei die Kommunikationssteuerungseinrichtung dafür ausgestaltet und eingerichtet ist, von den Domänen-Steuerungseinrichtungen (501-503) Domänen-übergreifende Reservierungsanfragen zur Bereitstellung von Ressourcen für eine Übertragung von Datenströmen zu empfangen, wobei die Datenströme zwischen ersten Kommunikationsgeräten (201) und zweiten Kommunikationsgeräten (202) über zumindest die ersten und zweiten Kommunikationsgeräte umfassende Pfade übermittelt werden und die Ressourcen durch die von den Pfaden umfassten Kommunikationsgeräte (100) bereitgestellt werden,
- wobei die Kommunikationssteuerungseinrichtung dafür ausgestaltet und eingerichtet ist, von den Reservierungsanfragen jeweils betroffene Domänen (401-403) zu ermitteln und auf jeweilige Abschnitte der Pfade beschränkte Teil-Reservierungsanfragen an die Domänen-Steuerungseinrichtungen (501-503) der ermittelten Domänen zu übermitteln.
